# EUROPEAN PATENT APPLICATION

(11) **EP 2 071 700 A1**
(43) Date of publication of application: **17.06.2009**
(21) Application number: 07829242.2
(22) Date of filing: 04.10.2007
(51) Int. Cl.: H02J 9/06, H02J 3/32

(54) **AC-DC CONVERSION DEVICE**

(30) Priority: 04.10.2006 JP 2006272519
(71) Applicant: THE TOKYO ELECTRIC POWER COMPANY INCORPORATED, Tokyo 100-8560 (JP); Meidensha Corporation, Tokyo 141-0032 (JP)
(72) Inventor: SUZUKI, Kenichi,, Tokyo 100-8560 (JP); FUKUDA, Naruhiko,, Tokyo 100-8560 (JP)
(74) Representative: Manitz, Finsterwald & Partner GbR
(86) International application number: PCT/JP2007/069504
(87) International publication number: WO 2008/041755

(57) **Abstract**

In order to provide an AC-DC conversion device which is capable of making a small-sized, inexpensive system even in a case of an instantaneous voltage reduction capacity compensation capacity » a load leveling capacity. The conversion device is constituted by connecting a fast switch between the commercial power source and the load and by connecting a PCS including a power storage unit, an AC-DC converter, and a linking transformer between the fast switch and the load. A part of a capacity constituting the power storage unit is constituted by an NaS battery and most of the reminder of the capacity is constituted by electric double layer capacitors.

## Description

### TECHNICAL FIELD

The present invention relates to an AC-DC conversion device and, particularly, relates to the AC-DC conversion device having functions of an instantaneous voltage reduction countermeasure and a power interruption countermeasure.

### BACKGROUND ART

Using an AC-DC conversion device having a power storage unit, a midnight power having a small electric power load is stored. Then, the stored power is discharged during a daytime peak to perform a leveling of the load and to provide functions of an instantaneous voltage reduction countermeasure and a power interruption countermeasure for the AC-DC conversion device.

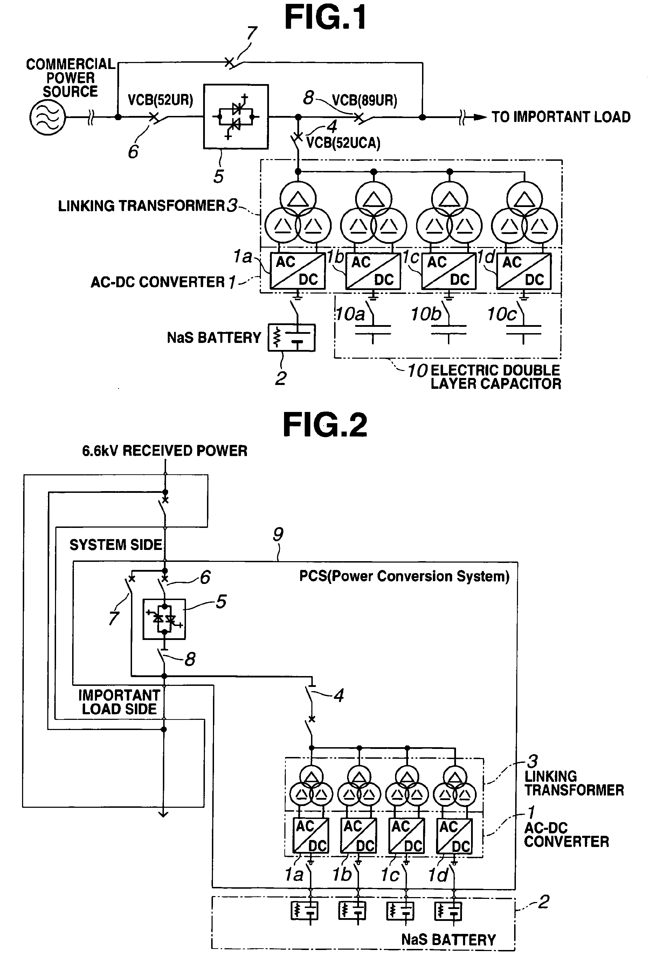

Fig. 2 shows an AC-DC conversion device having such functions of the instantaneous voltage reduction countermeasure and the power interruption countermeasure as described above. In Fig. 2, 1 denotes an alternating current to direct current converter of AC/DC converters constituted by a plurality of unit converters 1a through 1d. A direct-current side of each of unit converters 1a through 1d is connected to a power storage unit 2 using secondary batteries such as NaS battery (Natrium-Sulfur battery). 3 denotes linking transformers, each output thereof being connected to an important load side line via a linking circuit breaker 4. 5 denotes a fast switch, 6 denotes a received power circuit breaker, 7 denotes a bypass circuit breaker, and 8 denotes a load side circuit breaker. These 1 through 8 constitute a PCS (Power Conversion System) 9.

An electric power is ordinarily supplied from an electric power system to the load. In a case where the instantaneous voltage reduction and the power interruption occurs due to a certain reason, a control circuit opens fast switch 5 and the power stored in power storage unit 2 is supplied to the load via AC-DC converter 1, linking transformer 3, and linking circuit breaker 4. Such a device as described above is well known by, for example, a patent document 1.

NaS batteries are used as the batteries for the power storage unit used in the AC-DC conversion device as described above. This NaS battery carries out a charge-and-discharge of a rated capacity. However, if limited to a short time, the discharge at three-times the rated capacity is possible. Utilizing the capabilities of the respective batteries, a load leveling drive at one time the rated capacity is carried out and an instantaneous reduction compensation driving at three times the rated capacity is carried out.

Then, in the NaS batteries used for this purpose, multiple numbers of modules of 50 kW are ordinarily connected in serial-and-parallel connection forms to constitute the power storage unit. A construction method of 50kW modules includes, using 384 pieces or 320 pieces unit batteries, three combinations of (1): 8 pieces serial connections x 8 pieces serial connections x 6 pieces parallel connections = 384 pieces, (2) 8 pieces x 4 pieces serial connections x 12 parallel connections = 384 pieces, and (3) 8 pieces serial connections x 4 pieces serial connections x 10 pieces serial connections = 320 pieces. The power storage unit is ordinarily constituted in the method of (1) or (2). If the parallel connections are carried out, a lateral current is caused to flow in the respective unit batteries to reduce the output due to an unevenness of an internal resistance of each unit battery. To prevent this output reduction, the serial connection is made.

However, in a case of the module constructions of (3) described above, the serial connection cannot use the whole modules if any one of the unit batteries fails. Thus, a reliability of the whole system is reduced. On the other hand, in order to improve the reliability, use of a standard construction of (1) or (2) is made. The battery having a large capacity cannot help being introduced in a case where an instantaneous voltage reduction compensation capacity » a load leveling capacity. Consequently, a cost of the whole device is remarkably increased.
Patent document 1: a Japanese Patent Application First Publication (tokkai) No. 2004-23860.

### DISCLOSURE OF THE INVENTION

It is an object of the present invention to provide an AC-DC conversion device which is capable of making a small-size and inexpensive system even in a case of an instantaneous voltage reduction compensation capacity » a load leveling capacity.

According to one aspect of the present invention, there is provided device comprising: a commercial power source; a fast switch connected between the commercial power source and a load; and a PCS including an electric power storage unit, an AC-DC converter, and a linking transformer, the PCS being connected between the fast switch and the load, wherein a part of a capacity constituting the power storage unit is constituted by a secondary battery and the remainder of the capacity is constituted by electric double layer capacitors.

In addition, according to another aspect of the present invention, a construction ratio of an electric energy between the NaS battery and the electric double layer capacitors is 30% or less for the NaS battery and 70% or more for the electrical double layer capacitors.

Furthermore, according to a still another aspect of the present invention, the AC-DC converter is constituted by a plurality of unit converters.

Furthermore, according to a further another aspect of the present invention, the AC-DC converter is constituted by a plurality of unit converters, each of the unit converters being provided with an individually separate control section.

### BEST MODE FOR CARRYING OUT OF THE INVENTION

Fig. 1 shows a configuration view representing a preferred embodiment according to the present invention. The same reference numerals as those in Fig. 1 are designated to like parts or equivalent parts to Fig. 2. A reference numeral 10 denotes a second power storage unit constituted by electric double layer capacitors and is constituted by a plurality of modules 10a through 10n. A case of four parallel connections is shown in Fig. 1. A secondary battery such as an NaS battery, which has a high energy density and a small self-discharge, is used as first power storage unit 2. In Fig. 1, the NaS battery is used as the secondary battery and the electric double layer capacitors are connected to the AC-DC converter to compensate for large half or more electric powers required as second power storage unit 10. In this embodiment, the NaS battery is used for 25% (30% or less) electric energy from among electric energies required and electric double layer capacitors are used for the remaining 75% (70% or more) which is divided into 10a through 10c. These electric double layer capacitors are, respectively, connected to unit converters 1b through 1d.

That is to say, according to the present invention, a hybrid construction constituted by the NaS battery and electric double layer capacitors is taken as the power storage unit. According to the structure shown in Fig. 1, even if a simultaneous voltage reduction compensation capacity » a load leveling capacity, the whole system becomes inexpensive since the electric double layer capacitors are inexpensive as compared with the NaS batteries. An application percentage is such that 30% or less for NaS batteries and 70% or more for the electric double layer capacitors. Thus, the system is advantageous in terms of the function and the cost.

It should be noted that a control section for the divided unit converters 1a through 1d may be common but it may be considered that internal impedances and charge-discharge characteristics are different from each other since the individual electric double layer capacitors and linking transformers are connected to a plurality of respective unit AC-DC converters. If these matters are considered, it becomes more practical that individually different control sections are installed for the respective unit converters.

Next, an operation of the embodiment described above will be explained. Ordinarily, the electric power is supplied from a commercial power source to a load side when each of circuit breakers 4 through 8 is turned on. In this state, an instantaneous voltage reduction occurs at the commercial power source side due to some reason. When its voltage reduction rate becomes equal to or higher than a predetermined value, a fast switch 5 is immediately turned off and an inverter operation is started by any one or any combination of unit AC-DC converters 1a through 1d of AC-DC converter 1 corresponding to the predetermined voltage reduction rate and the energy stored in NaS battery 2 and electric double layer capacitors 10 as a power source is supplied to an important load side via linking transformer 3 and circuit breakers 4 and 8 by a predetermined electric power. Its supply of the electric power is continued until a voltage between fast switch 5 and the commercial power source is recovered.

In a case where a power interruption occurs at the commercial power source side, the electric power supply from PCS to the important load side is carried out in the same way as the instantaneous voltage reduction. In this case, the power interruption is determined when the detection level is reached to a predetermined power interruption threshold value exceeding the detection level of the instantaneous voltage reduction and both of a power source side circuit breaker 6 and a bypass circuit breaker 7 are turned off together with fast switch 5 so that the power supply to the important load side via power storage units 2, 10, AC-DC converter 1, linking transformer 3, and circuit breaker 8 is carried out.

According to the embodiment of the present invention, the power storage unit takes the hybrid construction of the NaS batteries (battery) and electric double layer capacitors. In this construction, the whole system becomes small-sized and inexpensive even if the instantaneous voltage reduction compensation capacity » the load leveling capacity.

Although the detailed description only to the described specific example is made, it is clearly appreciated by those skilled in the art that various modifications and corrections can be made in a range of a technical idea of the present invention. It is natural that these modifications and corrections should belong to the scope of the claims.

### BRIEF DESCIPTION OF THE DRAWINGS:

Fig. 1 is a configuration view representing a preferred embodiment according to the present invention.
Fig. 2 is a configuration view representing a conventional AC-DC conversion device.

## Claims

1. An AC-DC conversion device comprising:
a commercial power source;
a fast switch connected between the commercial power source and a load; and
a PCS including an electric power storage unit, an AC-DC converter, and a linking transformer, the PCS being connected between the fast switch and the load, wherein a part of a capacity constituting the power storage unit is constituted by a secondary battery and the remainder of the capacity is constituted by electric double layer capacitors.

2. The AC-DC conversion device as set forth in claim 1, wherein a construction ratio of an electric energy between the secondary battery and the electric double layer capacitors is such that an 30% or less are for an NaS battery and 70% or more are for the electric double layer capacitors.

3. The AC-DC conversion device as set forth in either claim 1 or 2, wherein the AC-DC converter is constituted by a plurality of unit converters.

4. The AC-DC conversion device as set forth in claim 3, wherein the AC-DC converter is constituted by a plurality of unit converters, each of the unit converters being provided with an individually separate control section.
